# EUROPÄISCHE PATENTSCHRIFT

(11) **EP 2 008 844 B1**
(45) Veröffentlichungstag und Bekanntmachung des Hinweises auf die Patenterteilung: **26.10.2011**
(21) Anmeldenummer: 08010421.9
(22) Anmeldetag: 09.06.2008
(51) Int. Cl.: B60J 5/04

(54) **Kraftfahrzeugtüranordnung**
Motor vehicle door assembly
Agencement de porte de véhicule automobile

(30) Priorität: 29.06.2007 DE 202007009184 U
(43) Veröffentlichungstag der Anmeldung: 31.12.2008
(73) Patentinhaber: Brose Schliesssysteme GmbH & Co. KG, 42369 Wuppertal (DE)
(72) Erfinder: Niekamp, Ulrich, 42289 Wuppertal (DE); Häger, Ole, 42899 Remscheid (DE)
(74) Vertreter: Gottschald, Jan

(56) Entgegenhaltungen:
- EP-A1- 1 065 336
- EP-A2- 0 236 726
- EP-A2- 1 146 185
- DE-A1- 2 725 345
- DE-A1- 19 954 648
- DE-U- 1 891 764
- DE-U1- 20 303 500
- GB-A- 2 282 843
- GB-A- 2 316 439

## Beschreibung

Die Erfindung betrifft eine Kraftfahrzeugtüranordnung mit den Merkmalen des Oberbegriffs von Anspruch 1 sowie eine Funktionskomponente, insbesondere ein Kraftfahrzeugschloß, mit den Merkmalen des Oberbegriffs von Anspruch 14.

Die in Rede stehende Kraftfahrzeugtüranordnung ist mit einer Kraftfahrzeugtür ausgestattet. Der Begriff "Kraftfahrzeugtür" ist vorliegend umfassend zu verstehen. Damit sind Seitentüren, die Heckklappe, die Kofferraumklappe, der Motorraumdeckel o. dgl. gemeint. Auch Schiebetüren sind von diesem Begriff umfaßt.

Eine bekannte Kraftfahrzeugtüranordnung (DE 197 47 709 A1) weist eine Kraftfahrzeugtür mit einem Türkörper auf, der einen Hohlraum bildet. Der Türkörper umfaßt u. a. ein Türinnenblech und ein Türaußenblech.

In dem von dem Türkörper gebildeten Hohlraum sind verschiedene Funktionkomponenten zur Bereitstellung von Türfunktionen vorgesehen. Dazu gehören ein motorischer Fensterheber, ein Türinnengriff, ein Türaußengriff und ein Kraftfahrzeugschloß. Die folgenden Ausführungen sind ausschließlich auf die Funktionskomponente "Kraftfahrzeugschloß" gerichtet. Dies ist nicht beschränkend zu verstehen.

Das Kraftfahrzeugschloß weist ein Gehäuse mit einem Gehäuseinnenraum auf, das mit einem Einlaufschlitz für einen zugeordneten Schließkeil ausgestattet ist. Es handelt sich hier um ein konventionelles Schloß mit Schloßfalle und Sperrklinke, dessen grundsätzlicher Aufbau beispielsweise in der DE 41 20 021 C1 beschrieben ist.

Bei der bekannten Kraftfahrzeugtüranordnung ist dem Einlaufschlitz eine Öffnung im Türinnenblech zugeordnet. Dadurch ist der Schließkeil von außen durch die Öffnung des Türinnenblechs hindurch in den Einlaufschlitz einführbar, wodurch er in Eingriff mit der Schloßfalle bringbar ist.

Es hat sich gezeigt, daß während des Fahrbetriebs, wenn sich das Kraftfahrzeug einschließlich der dem Kraftfahrzeug zugeordneten Kraftfahrzeugtüranordnung mit einer gewissen Geschwindigkeit bewegt, durch aerodynamische Effekte eine bestimmte Druckverteilung an der Kraftfahrzeugtür, in der Regel ein Unterdruck im Hohlraum der Kraftfahrzeugtür, entsteht. Ein solcher aerodynamischer Effekt geht oft auf den Venturi-Effekt zurück. Dabei bewirkt die am Türaußenblech vorbeiströmende Luft einen lokalen, statischen Unterdruck an der Außenseite der Kraftfahrzeugtür, wodurch Luft aus dem Hohlraum der Kraftfahrzeugtür nach außen strömt. Diese Strömung kann beispielsweise über im unteren Bereich der Kraftfahrzeugtür angeordnete Wasserablauflöcher erfolgen.

Durch das oben beschriebene Ausströmen der Luft aus dem Hohlraum bildet sich in dem Hohlraum ein entsprechender Unterdruck. Dieser Unterdruck bewirkt wiederum an anderer Stelle eine Ausgleichsströmung von Luft in den Hohlraum hinein über weitere in der Kraftfahrzeugtür vorhandene Öffnungen. Hier hat man es mit statischen und dynamischen Druckverhältnissen zu tun, die erheblichen lokalen Schwankungen unterliegen. Wesentlich ist vorliegend, daß im Hohlraum der Kraftfahrzeugtür ein Unterdruck entsteht, der eine Ausgleichsströmung in den Hohlraum hinein bewirkt.

Die Ausgleichsströmung folgt in der Regel unterschiedlichen Strömungspfaden. Ein Strömungspfad der Ausgleichsströmung verläuft durch die dem Kraftfahrzeugschloß zugeordnete Öffnung im Türinnenblech über den Einlaufschlitz in einen Teil des Gehäuseinnenraums des Kraftfahrzeugschlosses und von dort in den Hohlraum der Kraftfahrzeugtür. Dies ist möglich, da das Gehäuse des Kraftfahrzeugschlosses nicht luftdicht gekapselt ist.

Im Fahrbetrieb verläuft bei der bekannten Kraftfahrzeugtüranordnung also eine Ausgleichsströmung durch den Gehäuseinnenrauin des Kraftfahrzeugsehlosses in den Hohlraum hinein. Dieser Strömungspfad der Ausgleichsströmung ist insofern problematisch, als die in Rede stehende Ausgleichsströmung Staub- und Schmutzpartikel enthält. Damit bewirkt die Ausgleichsströmung bei der bekannten Kraftfahneugtüranordnung einen Staub- und Schmutzpartikeltransport in den Gehäuseinnenraum hinein. Dies kann in kurzer Zeit zu erheblichen. Ablagcrungen der Staub- und Schmutzpartikel an mechanischen Elementen des Kraftfahrzeugschlosses führen. Für den Benutzer spürbar sind durch Reibung verursachte erhöhte Betätigungskräfte, was als Komforteinbuße zu sehen ist.

Eine weitere bekannte Kraftfahrzeugtüranordnung (DE 199 54 648 A1) weist einen Nassraum und einen Trockenraum mit dazwischenliegender Nass-/Trockenraumtrennung auf. Die Nass-/Trockenraumtrennung, die jedenfalls auch von einer Funktionskomponente bereitgestellt werden kann, weist Bereiche auf, die eine gewisse Ausgleichsströmung erlauben. Der obige Staub- und Schmutzpartikeltransport wird nicht angesprochen.

Der Erfindung liegt das Problem zugrunde, die bekannte Kraftfahrzeugtüranordnung so auszugestalten und weiterzubilden, daß der Eintritt von Staub- und Schmutzpartikeln in den Gehäuseinnenraum von Funktionskomponenten, insbesondere des Kraftfahrzeugschlosses, reduziert wird.

Das obige Problem wird bei einer Kraftfahrzeugtüranordnung gemäß Anspruch 1 durch die Merkmale des kennzeichnenden Teils von Anspruch 1 gelöst.

Wesentlich ist die Überlegung, im Hinblick auf ggf. durch den Gehäuseinnenraum der Funktionskomponente verlaufende Ausgleichsströmung einen Bypass zu realisieren. Hierfür ist im Bereich der jeweiligen Funktionskomponente mindestens ein Ausgleichsdurchlaß für Ausgleichsströmung vorgesehen.

Derartige Bypassanordnungen sind grundsätzlich aus dem Bereich der Strömungslehre bekannt. Dabei wird ein erster Strömungspfad, hier der durch den Gehäuseinnenraum der Funktionskomponente verlaufende Strömungspfad, durch einen zweiten Strömungspfad überbrückt, so daß der größte Teil der Strömung, in manchen Fällen die gesamte Strömung, über den zweiten Strömungspfad läuft. Vorliegend wird der zweite Strömungspfad durch den Ausgleichsdurchlaß bereitgestellt.

Bei der vorschlagsgemäßen Lösung kommt es auf die richtige Auslegung des Ausgleichsdurchlasses an. Vorzugsweise hat der über den Ausgleichsdurchlaß verlaufende Strömungspfad der Ausgleichsströmung einen weitaus geringeren Strömungswiderstand als der über den Gehäuseinnenraum der Funktionskomponente verlaufende Strömungspfad der Ausgleichsströmung.

Durch den als Bypass wirkenden Ausgleichsdurchlaß läßt sich im Ergebnis die durch den Gehäuseinnenraum der Funktionskomponente verlaufende Ausgleichsströmung reduzieren, womit eine Reduzierung des Staub- und Schmutz partikeleintritts in den Gehäuseinnenraum verbunden ist. Der Aufwand für die Realisierung des vorschlagsgemäßen Ausgleichsdurchlasses ist denkbar gering.

Mit einer entsprechenden Auslegung des Ausgleichsdurchlasses läßt sich die ggf. verbleibende durch den Gehäuseinnenraum der Funktionskomponente verlaufende Ausgleichsströmung erheblich reduzieren. Bei der bevorzugten Ausgestaltung gemäß Anspruch 2 ist der Ausgleichsdurchlaß so bemessen und angeordnet, daß die verbleibende durch den Gehäuseinnenraum der Funktionskomponente verlaufende Ausgleichsströmung vernachlässigbar gering ist. Entsprechend gering ist auch der Staub- und Schmutzpartikeleintritt.

Vorschlagsgemäß ist der Ausgleichsdurchlaß in der Funktionskomponente selbst vorgesehen. Dies ist insbesondere bei einer als Kraftfahrzeugschloß mit Einlaufschlitz ausgestalteten Funktionskomponente (Anspruch 6) besonders leicht zu realisieren. Bei der weiter bevorzugten Ausgestaltung gemäß Anspruch 7 mündet der Ausgleichsdurchlaß im Einlaufschlitz, so daß auf zusätzliche Öffnungen im Türkörper verzichtet werden kann.

Die bevorzugten Ansprüche 10 bis 12 betreffen vorteilhafte Varianten des Ausgleichsdurchlasses. Welche konstruktive Ausgestaltung dem Ausgleichsdurchlaß optimaler Weise zukommt, hängt im Einzelfall von den jeweiligen konstruktiven Randbedingungen ab.

Nach einer weiteren Lehre gemäß Anspruch 14, der eigenständige Bedeutung zukommt, wird eine Funktionskomponente, insbesondere ein Kraftfahrzeugschloß, als solche bzw. als solches beansprucht. Wesentlich ist dabei die Tatsache, daß in der Funktionskomponente mindestens ein Ausgleichsdurchlaß für Ausgleichsströmung vorgesehen ist und daß der Ausgleichsdurchlaß im Hinblick auf ggf. durch den Gehäuseinnenraum der Funktionskomponente verlaufende Ausgleichsströmung als Bypass wirkt. Bei dieser Funktionskomponente handelt es sich vorzugsweise um das oben erläuterte Kraftfahrzeugschloß mit Einlaufschlitz.

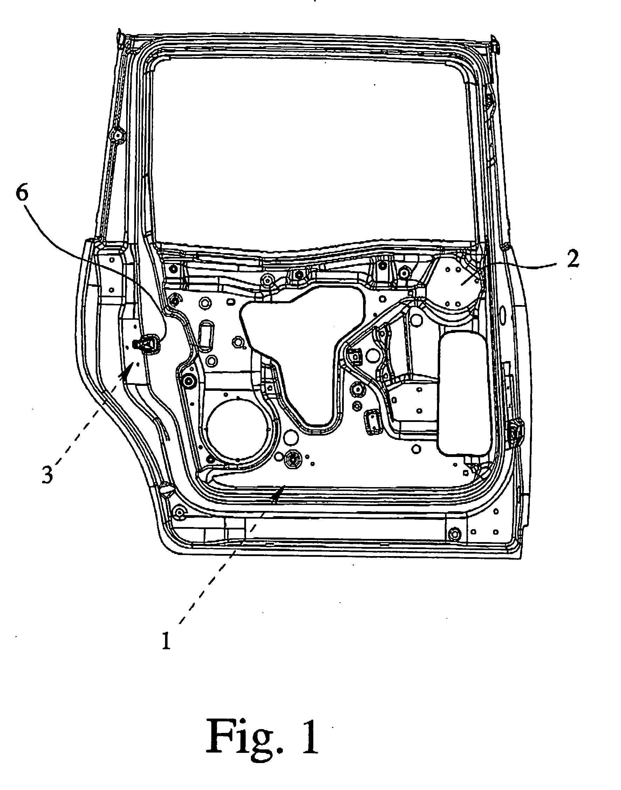

Im folgenden wird die Erfindung anhand einer lediglich Ausführungsbeispiele darstellenden Zeichnung erläutert. In der Zeichnung zeigt
- Fig. 1: das Türinnenblech der Kraftfahrzeugtür einer vorschlagsgemäßen Kraftfabrzeugtüranordnung bei montiertem Kraftfahrzeugschloß in einer Ansicht vom Fahrzeuginnenraum aus,

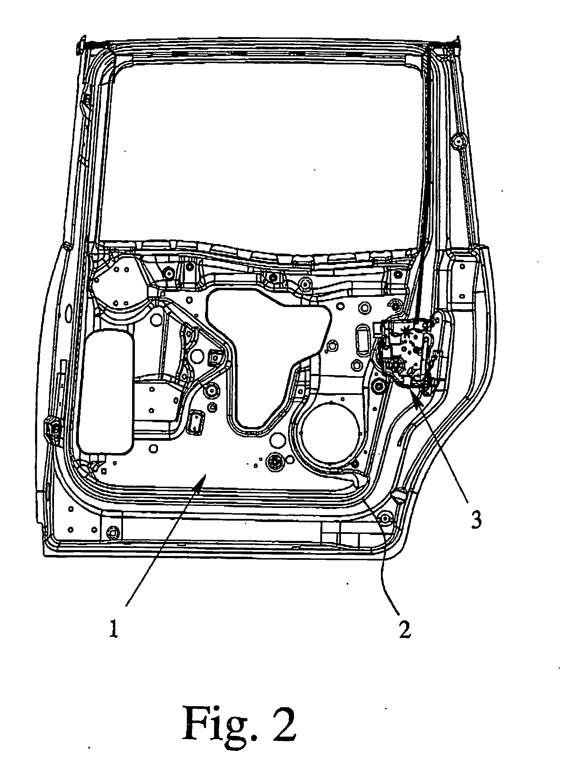

- Fig. 2: das in Fig. 1 dargestellte Türinnenblech in einer Ansicht vom Fahrzeugaußenraum aus,
- Fig. 3: das in Fig. 1 dargestellte Kraftfahrzeugschloß in der dortigen Ansicht im unmontierten Zustand,
- Fig. 4: das in Fig. 3 dargestellte Kraftfahrzeugschloß in einer Ansicht gemäß Fig. 2 im unmontierten Zustand,
- Fig. 5: eine weitere Ausführungsform des in Fig. 3 dargestellten Kraftfahrzeugschlosses in der dortigen Ansicht und
- Fig. 6: das in Fig. 5 dargestellte Kraftfahrzeugschloß in der Ansicht gemäß Fig. 4.

Die vorschlagsgemäße Kraftfahrzeugtüranordnung ist mit einer Kraftfahrzeugtür o. dgl. ausgestattet. Hinsichtlich der umfassenden Bedeutung des Begriffs "Kraftfahrzeugtür" darf auf die Beschreibungseinleitung verwiesen werden. Im folgenden wird die vorschlagsgemäße Lösung anhand einer Schiebetür erläutert, was nicht beschränkend zu verstehen ist.

Die Kraftfahrzeugtür weist einen Türkörper auf, der einen Hohlraum 1 bildet. Hier und vorzugsweise umfaßt der Türkörper ein Türinnenblech 2, ein nicht dargestelltes Türaußenblech sowie nicht dargestellte Abdeckelemente. Grundsätzlich kann der Türkörper auch Modulträger o. dgl. umfassen, die einen Wandbereich für den Hohlraum bereitstellen.

Die Kraftfahrzeugtür weist mindestens eine in dem Hohlraum 1 angeordnete Funktionskomponente 3 zur Bereitstellung einer Türfünktion auf. Varianten für solche Funktionskomponenten 3 werden weiter unten gegeben. Im folgenden wird zunächst ausschließlich auf die Funktionskomponente "Kraftfahrzeugschloß" abgestellt, was nicht beschränkend zu verstehen ist.

Die Funktionskomponente 3, hier das Kraftfahrzeugschloß 3, weist ein Gehäuse 4 auf, wobei zumindest ein Teil des Gehäuseinnenraums 5 funktionsbedingt über eine der Funktionskomponente 3 zugeordnete Öffnung 6 im Türkörper, hier im Türinnenblech 2, nach außen hin im wesentlichen offen ist. Dies wird anhand des Kraftfahrzeugschlosses 3 weiter unten im einzelnen erläutert. Wesentlich ist an dieser Stelle, daß mit "außen" ganz allgemein der Bereich außerhalb des Hohlraums 1 gemeint ist. Der Gehäuseinnenraum 5 kommuniziert also über die Öffnung 6 im Türkörper, hier im Türinnenblech 2, mit dem Bereich außerhalb des Hohlraums 1.

Es wurde im einleitenden Teil der Beschreibung erläutert, daß im montierten Zustand während des Fahrbetriebs durch aerodynamische Effekte eine bestimmte Druckverteilung an der Kraftfahrzeugtür, vorzugsweise ein Unterdruck im Hohlraum 1 der Kraftfahrzeugtür entsteht. Im folgenden wird davon ausgegangen, daß ein Unterdruck im Hohlraum 1 entsteht. Dies ist nicht beschränkend zu verstehen. Die gleiche noch zu erläuternde Wirkung kann auch durch einen außerhalb des Hohlraums wirkenden Staudruck o. dgl. entstehen.

Das Gehäuse 4 ist nicht vollständig luftdicht ausgestaltet, so daß der im Hohlraum 1 entstehende Unterdruck ein Ansaugen von Luft über den nach außen hin im wesentlichen offenen Teil des Gehäuseinnenraums 5 bewirken kann. Dies ist grundsätzlich mit dem erläuterten Nachteil des Staub- und Schmutzpartikeleintritts in den Gehäuseinnenraum 5 verbunden.

Um den obigen Staub- und Schmutzpartikeleintritt in den Gehäuseinnenraum 5 weitgehend zu vermeiden, ist es vorgesehen, daß in der Kraftfahrzeugtür im Bereich der Funktionskomponente 3 mindestens ein Ausgleichsdurchlaß 7 für Ausgleichsströmung vorgesehen ist und daß der Ausgleichsdurchlaß 7 im Hinblick auf eine ggf. durch den Gehäuseinnenraum 5 der Funktionskomponente 3 verlaufende Ausgleichsströmung als Bypass wirkt. Damit wird erreicht, daß ein wesentlicher Teil der ansonsten durch den Gehäuseinnenraum 5 der Funktionskomponente 3 verlaufenden Ausgleichsströmung nunmehr über den Ausgleichsdurchlaß 7 verläuft, womit eine Reduzierung des Staub- und Schmutzpartikeleintritts in den Gehäuseinnenraum 5 verbunden ist.

Vorzugsweise ist der Ausgleichsdurchlaß 7 so bemessen und angeordnet, daß die durch den Gehäuseinnenraum 5 der Funktionskomponente 3 verlaufende Ausgleichsströmung verglichen mit einer Anordnung ohne Ausgleichsdurchlaß 7 um mindestens 30%, weiter vorzugsweise um mindestens 50%, weiter vorzugsweise um mindestens 80% reduziert ist. Optimal ist es, wenn der Ausgleichsdurchlaß 7 so bemessen und angeordnet ist, daß die verbleibende durch den Gehäuseinnenraum 5 der Funktionskomponente 3 verlaufende Ausgleichsströmung vernachlässigbar gering ist.

Für die Anordnung des Ausgleichsdurchlasses 7 sind unterschiedliche Varianten denkbar, die je nach Anwendungsfall unterschiedlich vorteilhaft sind.

Bei der vorschlagsgemäßen Anordnung des Ausgleichsdurchlasses 7 ist der Ausgleichsdurchlaß 7 in der Funktionskomponente 3 selbst vorgesehen. Dies hat den Vorteil, daß die Funktion des Bypasses gewissermaßen in die Funktionskomponente 3 integriert ist. Dies steigert die universelle Anwendbarkeit des Kraftfahrzeugschlosses für unterschiedliche Kraftfahrzeugtüren.

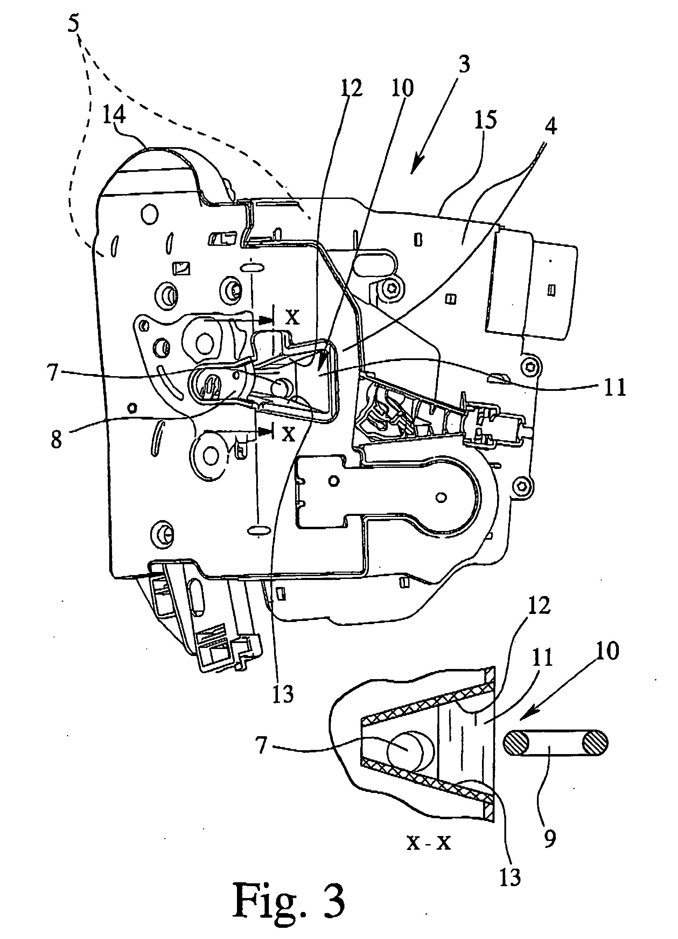

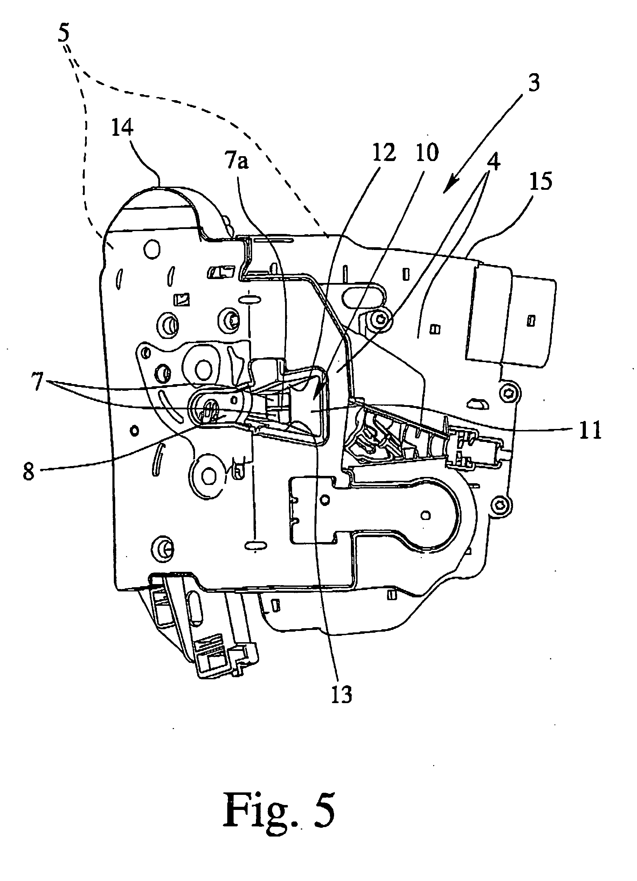

Bei der Anordnung des Ausgleichsdurchlasses 7 in der Funktionskomponente 3 selbst erstreckt sich der Ausgleichsdurchlaß 7 vorzugsweise durch die Funktionskomponente 3 hindurch, wobei der Ausgleichsdurchlaß 7 weiter vorzugsweise eine Ausnehmung in einem Bereich der Funktionskomponente 3 ist. Dies ist bei den dargestellten und insoweit bevorzugten Ausführungsbeispielen der Fall. Zum richtigen Verständnis der perspektivischen Darstellungen in den Fig. 3 und 5 ist zu berücksichtigen, daß der jeweilige Ausgleichsdurchlaß 7 nicht senkrecht zu einer zugeordneten Eintrittsfläche im Gehäuse 4 verläuft, sondern schräg dazu. In Fig. 3 verläuft der Ausgleichsdurchlaß 7 gewissermaßen von vorne rechts nach hinten links.

Die Anordnung des Ausgleichsdurchlasses 7 in der Funktionskomponente 3 selbst wird im folgenden anhand der Funktionskomponente "Kraftfahrzeugschloß" erläutert. Dabei darf darauf hingewiesen werden, daß die ersten beiden Varianten der Anordnung des Ausgleichsdurchlasses 7 ebenfalls auf die Funktionskomponente "Kraftfahrzeugschloß" anwendbar sind.

Die Fig, 1 und 2 zeigen die als Kraftfahrzeugschloß ausgestaltete Funktionskomponente 3 im montierten Zustand. Dabei wurde auf die Darstellung des Türau-βenblechs sowie weiterer Abdeckelemente verzichtet.

Das Kraftfahrzeugschloß 3 weist eine in Fig. 3 dargestellte Schloßfalle 8 auf, die in üblicher Weise mit einem Schließkeil 9 o. dgl. in Eingriff bringbar ist. Das Gehäuse 4 des Kraftfahrzeugschlosses weist einen Einlaufschlitz 10 für den Schließkeil 9 auf, wobei die oben angesprochene, dem Kraftfahrzeugschloß 3 zugeordnete Öffnung 6 im Türkörper hier speziell dem Einlaufschlitz 10 zugeordnet ist. Ein Teil des Gehäuseinnenraums 5 ist also über den Einlaufschlitz 10 und die Öffnung 6 nach außen hin im wesentlichen offen.

Mit "im wesentlichen offen" ist gemeint, daß keine regelrechte Öffnung zwischen dem Einlaufschlitz 10 und dem Gehäuseinnenraum 5 vorgesehen sein muß, Vielmehr ist damit gemeint, daß der Gehäuseinnenraum 5 irgendwie, beispielsweise auch über - undichte - Drehdurchführungen, Lagerungen o. dgl. mit dem Einlaufschlitz 10 und damit mit dem Bereich außerhalb des Hohlraums 1 kommunizieren kann. Dieses weite Verständnis des Begriffes "im wesentlichen offen" gilt für alle Ausgestaltungen.

Der im Hohlraum 1 wirkende Unterdruck erzeugt hier grundsätzlich eine durch den Einlaufschlitz 10 und den Gehäuseinnenraum 5 verlaufende Ausgleichsströmung, sofern diese Ausgleichsströmung nicht vollständig oder zumindest zum Teil über einen oben beschriebenen Ausgleichsdurchlaß 7 verläuft.

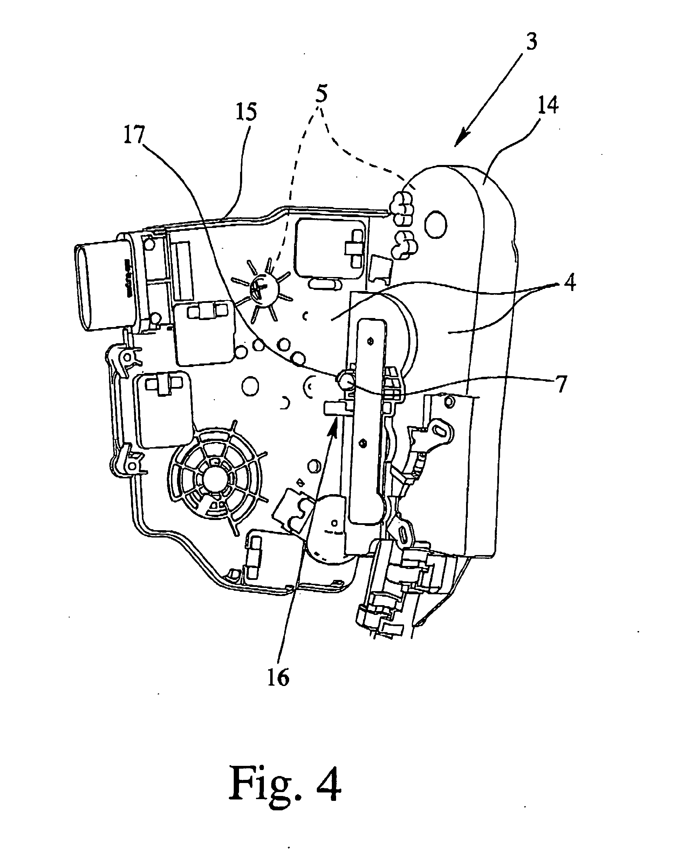

In besonders bevorzugter Ausgestaltung ist es vorgesehen, daß sich der Ausgleichsdurchlaß 7 durch das Kraftfahrzeugschloß 3 hindurch erstreckt, wobei der Ausgleichsdurehlaß 7 vorzugsweise im Einlaufschlitz 10 mündet. Dies läßt sich besonders gut einer Zusammenschau der Fig. 3 und 4 entnehmen. Als besonders vorteilhaft hat sich eine Ausgestaltung erwiesen, bei der der Ausgleichsdurchlaß 7 im Boden 11 des Einlaufschlitzes 10 mündet. Alternativ oder zusätzlich kann der Ausgleichsdurchlaß 7 aber auch in den Seitenwänden 12, 13 des Einlaufschlitzes 10, die sich senkrecht vom Boden 11 des Einlaufschlitzes 10 erstrecken, angeordnet sein. Bei beiden zuvor dargestellten Varianten ist der Ausgleichsdurchlaß 7 in Einlaufrichtung des Schließkeils 9 gesehen vor der Schloßfalle 8 gelegen.

Grundsätzlich ist die vorschlagsgemäße Lösung auf alle möglichen Bauarten von Kraftfahrzeugschlössern anwendbar. Hier und vorzugsweise ist das Kraftfahrzeugschloß 3 insgesamt winkelförmig mit einem ersten Schenkel 14, der die Schließelemente aufnimmt und einem zweiten Schenkel 15, der zumindest einen Teil der Schloßmechanik aufnimmt, ausgestaltet. Bei dieser winkelförmigen Ausgestaltung ist es vorzugsweise so, daß der Ausgleichsdurchlaß 7 einerends im Einlaufschlitz 10 und anderenends im Übergangsbereich 16 zwischen den beiden Schenkeln 14,15 des Kraftfahrzeugschlosses 3 mündet.

Je nach Anwendungsfall kann es vorteilhaft sein, daß das Gehäuse 4 der Funktionskomponente 3, hier des Kraftfahrzeugschlosses, gegenüber der der Funktionskomponente 3 zugeordneten Öffnung 6 des Türkörpers abgedichtet ist. Bei den dargestellten und insoweit bevorzugten Ausführungsbeispielen würde eine solche Abdichtung durch ein randseitig des Einlaufschlitzes 10 angeordnetes Dichtelement realisiert sein.

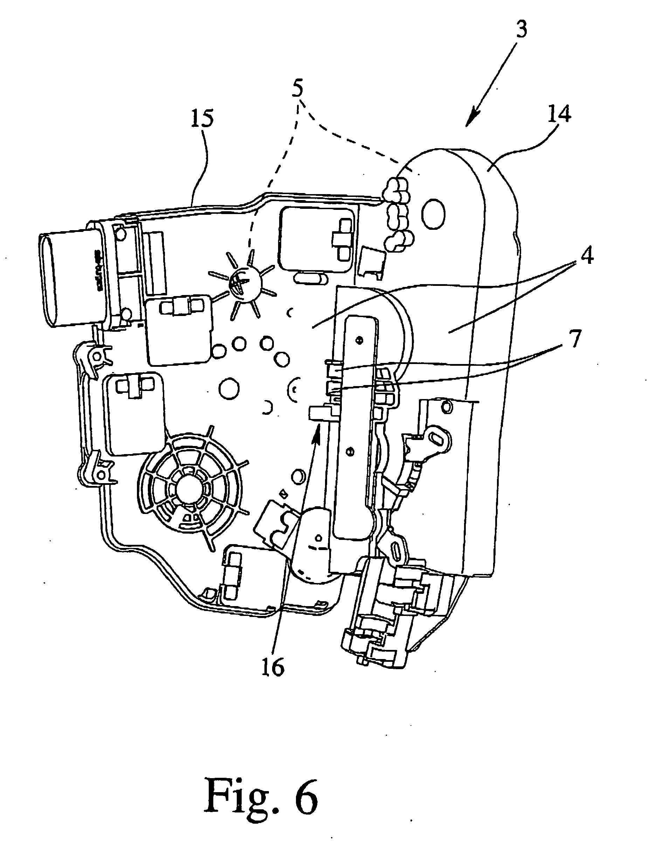

Bei dem in den Fig. 3, 4 dargestellten und insoweit bevorzugten Ausführungsbeispiel ist ein einziger Ausgleichsdurchlaß 7 vorgesehen. Grundsätzlich kann es aber auch vorgesehen sein, daß mehrere Ausgleichsdurchlässe 7 vorgesehen sind, die ggf. lediglich durch Stege 7a o. dgl. voneinander getrennt sind (Fig. 5, 6). Die mehreren Ausgleichsdurchlässe 7 können aber auch an unterschiedlichen Stellen im Bereich der Funktionskomponente 3 angeordnet sein.

Es sind zahlreiche konstruktive Ausgestaltungen des Ausgleichsdurchlasses 7 denkbar, die grundsätzlich unabhängig davon, ob der Ausgleichsdurchlaß 7 im Türkörper oder im Funktionselement 3 angeordnet ist, zur Anwendung kommen können.

In bevorzugter Ausgestaltung ist der Ausgleichsdurchlaß 7 im Querschnitt rundlich, vorzugsweise kreisrund oder elliptisch ausgestaltet. Eine im Querschnitt kreisrunde Ausgestaltung ist in den Fig. 3 und 4 dargestellt.

Besonders leicht in bestehende Konstruktionen integrierbar ist ein im Querschnitt eckig ausgestalteter Ausgleichsdurchlaß 7. Hier ist der Ausgleichsdurchlaß 7 vorzugsweise rechteckig ausgestaltet, wie in den Fig. 5 und 6 dargestellt.

Die in den Fig. 5 und 6 dargestellte und insoweit bevorzugte Ausgestaltung zeigt mehrere Ausgleichsdurchlässe 7, die in oben angesprochener Weise durch Stege 7a voneinander getrennt sind. Die zwischen den Ausgleichsdurchlässen 7 liegenden Stege 7a sind Teil einer Rippenstruktur zur Versteifung der Anordnung. Auf diese Weise läßt sich die Realisierung des Ausgleichsdurchlasses 7 mit der Realisierung von Versteifungsrippen auf einfache Weise miteinander kombinieren.

Es darf an dieser Stelle darauf hingewiesen werden, daß dem Öffnungsquerschnitt der Ausgleichsdurchlässe 7 besondere Bedeutung zukommt. Am Beispiel der in den Fig. 5 und 6 dargestellten Ausgestaltung liegt der Querschnitt eines Ausgleichsdurchlasses 7 vorzugsweise zwischen etwa 15 mm² und etwa 25 mm², vorzugsweise bei im wesentlichen 22,75 mm². Im letztgenannten Fall ist es vorzugsweise so, daß ein im Querschnitt rechteckig ausgestalteter Ausgleichsdurchlaß 7 eine Länge von etwa 7 mm und eine Breite von etwa 3,25 mm aufweist.

Weiter kann es vorteilhaft sein, daß der Ausgleichsdurchlaß 7 im wesentlichen rohrförmig ausgestaltet ist, wobei sich der rohrförmige Ausgleichsdurchlaß 7 im montierten Zustand weiter vorzugsweise im wesentlichen horizontal erstreckt. Dabei kann der Ausgleichsdurchlaß 7 gerade oder gebogen ausgestaltet sein. Denkbar ist auch, daß der Ausgleichsdurchlaß 7 nach Art einer Düse ausgestaltet ist. Dabei kann die Düse in Strömungsrichtung gesehen einen sich verjüngenden oder einen sich erweiternden Querschnitt aufweisen.

Besondere Vorteile lassen sich dadurch erreichen, daß der Ausgleichsdurchlaß 7 eine labyrinthartige Struktur umfaßt. Beispielsweise kann der Ausgleichsdurchlaß 7 als Ausnehmung realisiert sein, in der ineinander verschachtelte labyrinthartige Wände angeordnet sind. Diese Wände stehen senkrecht zur Strömungsrichtung, Eine solche labyrinthartige Struktur ist insbesondere interessant, wenn eine Ausnehmung in der Funktionskomponente 3 oder im Türkörper die Einbruchsicherheit reduzieren würde. Beispielsweise ist es denkbar, daß durch eine im Einlaufschlitz vorgesehene Ausnehmung - Ausgleichsdurchlaß 7 - bestimmte Einbruchwerkzeuge geführt werden könnten, um die Sperrklinke des Kraftfahrzeugschlosses 3 auszuheben. Die Realisierung einer labyrinthartigen Struktur würde dies verhindern und die Einbruchsicherheit wieder erhöhen.

Es ist der Darstellung in Fig. 4 ansatzweise zu entnehmen, daß sich an den Ausgleichsdurchlaß 7 zum Hohlraum 1 hin ein schirmartiger Ansatz 17 anschließt, der im montierten Zustand nach oben hin einen Spritzwasserschutz 18 bereitstellt.

Grundsätzlich kann es auch vorgesehen sein, daß sich an den Ausgleichsdurchlaß 7 zum Hohlraum 1 hin ein Schlauch, ein Rohr o. dgl. anschließt. Damit läßt sich die Ausgleichsströmung an eine beliebige Stelle im Hohlraum 1 leiten. Ein derartig angeschlossener Schlauch bzw. ein derartig angeschlossenes Rohr o. dgl. kann ferner die Einbruchsicherheit in obigem Sinne erhöhen.

In weiter bevorzugter Ausgestaltung ist im Bereich des Ausgleichsdurchlasses 7 mindestens ein nicht dargestelltes Leitblech für die Ausgleichsströmung vorgesehen. Auch hiermit läßt sich der Verlauf der Ausgleichsströmung. 7 beeinflussen. Ein solches Leitblech kann sowohl nach innen zum Hohlraum 1 hin als auch nach außen hin vorgesehen sein, Bei geeigneter Ausgestaltung des Leitblechs kann dieses gleichzeitig eine mechanische Abschirmung zur Erhöhung der Einbruchsicherheit bereitstellen.

Um die übrigen Funktionskomponenten der Kraftfahrzeugtür vor über die Ausgleichsströmung transportierten Staub- und Schmutzpartikeln zu schützen, ist der Ausgleichsdurchlaß 7 vorzugsweise mit einer Filteranordnung ausgestattet. In einer besonders einfachen Ausgestaltung ist in die Ausgleichsöffnung 7 ein Filtermaterial, beispielsweise ein Vlies, eingesetzt.

Mit allen erläuterten Ausgestaltungen läßt sich der Staub- und Schmutzpartikeleintritt in den Gehäuseinnenraum 5 der Funktionskomponente 3, hier des Kraftfahrzeugschlosses 3, erheblich reduzieren. Ein positiver Nebeneffekt der vorschlagsgemäßen Lösung ist die Tatsache, daß durch den Ausgleichsdurchlaß 7 - und damit an der Funktionskomponente 3 vorbei - auch Feuchtigkeit in den Hohlraum 1 gesaugt wird,

Es darf noch darauf hingewiesen werden, daß auch der Begriff "Hohlraum" hier weit zu verstehen ist. Darunter fallen beispielsweise alle Anordnungen, in denen ein bestimmter Unterdruck erzeugbar ist, der zu der oben beschriebenen Ausgleichsströmung führt. Dabei kann es sich auch um einen lokalen Unterdruck innerhalb der Kraftfahrzeugtür handeln. Eine vollständig gekapselte Anordnung ist entsprechend nicht unbedingt notwendig. Dies gilt natürlich insbesondere für den Fall, daß die Ausgleichsströmung durch einen außerhalb des Hohlraums wirkenden Staudruck entsteht.

Es wurde bereits darauf hingewiesen, daß die vorschlagsgemäße Lösung auf alle möglichen Funktionskomponenten 3 einer Kraftfahrzeugtür anwendbar ist. Insbesondere kann es sich bei solchen Funktionskomponenten 3 um Türfeststeller, Türantriebe oder motorische Fensterheber handeln. Auch für Nebenschlösser in Schiebetüren kann die vorschlagsgemäße Lösung vorteilhaft anwendbar sein.

Nach einer weiteren Lehre, der ebenfalls eigenständige Bedeutung zukommt, wird die oben beschriebene Funktionskomponente 3 für eine Kraftfahrzeugtür als solche beansprucht. Dabei handelt es sich insbesondere um ein Kraftfahrzeugschloß 3.

Wesentlich ist nach dieser weiteren Lehre, daß in der Funktionskomponente 3 mindestens ein Ausgleichsdurchlaß 7 für Ausgleichsströmung vorgesehen ist und daß der Ausgleichsdurchlaß 7 im Hinblick auf ggf. durch den Gehäuseinnenraum 5 der Funktionskomponente 3 verlaufende Ausgleichsströmung als Bypass wirkt. Eine solche Funktionskomponente 3, insbesondere ein solches Kraftfahrzeugschloß 3, wurde weiter oben erläutert. Auf diese Ausführungen darf in vollem Umfange verwiesen werden.

## Patentansprüche

1. Kraftfahrzeugtüranordnung mit einer Kraftfahrzeugtür o. dgl., wobei die Kraftfahrzeugtür einen Türkörper aufweist, wobei der Türkörper einen Hohlraum (1) bildet, wobei die Kraftfahrzeugtür mindestens eine in dem Hohlraum (1) angeordnete Funktionskomponente (3) zur Bereitstellung einer Türfunktion aufweist, wobei die Funktionskomponente (3) ein nicht vollständig luftdichtes Gehäuse (4) aufweist und wobei zumindest ein Teil des Gehäuseinnenraums (5) funktionsbedingt über eine der Funktionskomponente (3) zugeordnete Öffnung (6) im Türkörper nach außen hin im wesentlichen offen ist, wobei im montierten Zustand während des Fabrbetriebs durch aerodynamische Effekte eine bestimmte Druckverteilung an der Kraftfahrzeugtür, vorzugsweise ein Unterdruck im Hohlraum (1) der Kraftfahrzeugtür, entsteht, was eine ggf. durch den Gehäuseinnenraum (5) der Funktionskomponente (3) verlaufende Ausgleichsströmung von Luft in den Hohlraum (1) hinein bewirkt, wobei in der Kraftfahrzeugtür im Bereich der Funktionskomponente (3) mindestens ein Ausgleichsdurchlaß (7) für Ausgleichsströmung vorgesehen ist,
**dadurch gekennzeichnet,**
**daß** der Ausgleichsdurchlaß (7) im Hinblick auf ggf. durch den Gehäuseinnenraum (5) der Funktionskomponente (3) verlaufende Ausgleichsströmung als Bypass wirkt und daß der Ausgleichsdurchlaß (7) in der Funktionskomponente (3) selbst vorgesehen ist.

2. Kraftfahrzeugtüranordnung nach Anspruch 1, **dadurch gekennzeichnet, daß** der Ausgleichsdurchlaß (7) so bemessen und angeordnet ist, daß die durch den Gehäuseinnenraum (5) der Funktionskomponente (3) verlaufende Ausgleichsströmung verglichen mit einer Anordnung ohne Ausgleichsdurchlaß (7) um mindestens 30%, vorzugsweise um mindestens 50%, weiter vorzugsweise um mindestens 80%, reduziert ist, weiter vorzugsweise, daß die verbleibende durch den Gehäuseinnenraum (5) der Funktionskomponente (3) verlaufende Ausgleichsströmung vernachlässigbar gering ist.

3. Kraftfahrzeugtüaranordnung nach Anspruch 1 oder 2, **dadurch gekennzeichnet, daß** der Ausgleichsdurchlaß (7) im Türkörper, vorzugsweise in einem Türblech (2) des Türkörpers, vorgesehen ist, vorzugsweise, daß der Ausgleichsdurchlaß (7) in unmittelbarer Nähe zu der Funktionskomponente angeordnet ist.

4. Kraftfahrzeugtüranordnung nach einem der vorhergehenden Ansprüche, **dadurch gekennzeichnet, daß** sich der Ausgleichsdurchlaß (7) durch die Funktionskomponente (3) hindurch erstreckt, vorzugsweise, daß der Ausgleichsdurchlaß (7) eine Ausnehmung in einem Bereich der Funktionskomponente (3) ist.

5. Kraftfahrzeugtüranordnung nach einem der vorhergehenden Ansprüche, **dadurch gekennzeichnet, daß** die Funktionskomponente (3) als Kraftfahrzeugschloß ausgestaltet ist, vorzugsweise, daß das Kraftfahrzeugschloß (3) eine Schloßfalle (8) aufweist, die mit einem Schließkeil (9) o. dgl. in Eingriff bringbar ist, weiter vorzugsweise, daß das Gehäuse (4) des Kranfahrzeugschloßes einen Einlaufschlitz (10) für den Schließkeil (9) aufweist und daß die dem Kraftfahrzeugschloß (3) zugeordnete Öffnung (6) im Türkörper dem Einlaufschlitz (10) zugeordnet ist.

6. Kraftfahrzeugtüranordnung nach Anspruch 5, **dadurch gekennzeichnet, daß** der Ausgleichsdurehlaß (7) im Einlaufschlitz (10) mündet, vorzugsweise, daß der Ausgleichsdurchlaß (7) im Boden (11) des Einlaufschlitzes (10) mündet, weiter vorzugsweise, daß der Ausgleichsdurchlaß (7) in Einlaufrichtung des Schließkeils (9) gesehen von der Schloßfalle (8) gelegen ist.

7. Kraftfahrzeugtüranordnung nach Anspruch 5 oder 6, **dadurch gekennzeichnet, daß** das Kraftfahrzeugschloß (3) insgesamt winkelförmig mit einem ersten Schenkel (14), der die Schließelemente aufnimmt und einem zweiten Schenkel (15), der zumindest einen Teil der Schloßmechanik aufnimmt, ausgestaltet ist, vorzugsweise, daß der Ausgleichsdurchlaß (7) einerends im Einlaufschlitz (10) und anderenends im Übergangsbereich zwischen den beiden Schenken (14, 15) des Krafrfahrzeugschlosses (3) mündet.

8. Kraftfahrzeugtüranordnung nach einem der vorhergehenden Ansprüche, **dadurch gekennzeichnet, daß** das Gehäuse (4) der Funktionskomponente (3) gegenüber der der Funktionskomponente (3) zugeordneten Öffnung (6) des Türkörpers abgedichtet ist.

9. Kraftfahrzeugtüranordnung nach einem der vorhergehenden Ansprüche, **dadurch gekennzeichnet, daß** mehrere Ausgleicbsdurchlässe (7) vorgesehen sind, vorzugsweise, daß die Ausgleichsdurchlässe (7) durch Stege (7a) o. dgl. voneinander getrennt sind.

10. Kraftfahrzeugtüranordnung nach einem der vorhergehenden Ansprüche, **dadurch gekenntzeichnet, daß** der Ausgleichsdurchlaß (7) im Querschnitt rundlich, vorzugsweise kreisrund oder elliptisch, ausgestattet ist, oder, daß der Ausgleichsdurchlaß (7) im Querschnitt eckig, vorzugsweise rechteckig, ausgestaltet ist, oder, daß der Ausgleichsdurchlaß (7) im wesentlichen rohrförmig ausgestaltet ist, vorzugsweise, daß sich der rohrförmige Ausgleichsdurchlaß (7) im montierten Zustand im wesentlichen horizontal erstreckt.

11. Kraftfahrzeugtüranordnung nach einem der vorhergehenden Ansprüche, **dadurch gekennzeichnet, daß** der Ausgleichsdurchlaß (7) nach Art einer Düse ausgestattet ist, und/oder, daß der Ausgleichsdurchlaß (7) eine labyrinthartige Struktur umfasst.

12. Kraftfahrzeugtüranordnung nach einem der vorhergehenden Ansprüche, **dadurch gekennzeichnet, daß** sich an den Ausgleichsdurchlaß (7) zum Hohlraum (1) hin ein schirmartiger Ansatz (17) anschließt, der im montierten Zustand nach Oben hin einen Spritzwasserschutz bereitstellt, und/oder, daß sich an den Ausgleichsdurchlaß (7) zum Hohlraum (1) hin ein Schlauch, ein Rohr o. dgl. anschließt.

13. Kraftfahrzeugtüranordnung nach einem der vorhergehenden Ansprüche, **dadurch gekennzeichnet, daß** im Bereich des Ausgleichsdurchlaßes (7) mindestens ein Leitblech für die Ausgleichsströmung vorgesehen ist, vorzugsweise, daß das Leitblech gleichzeitig eine mechanische Abschirmung im Sinne eines Einbruchschutzes bereitstellt.

14. Funktionskomponente, insbesondere Kraftfahrzeugschloß, für eine Kraftfahrzeugtür, wobei die Kraftfahrzeugtür einen Türkörper aufweist, wobei der Türkörper einen Hohlraum (1) bildet und die Funktionskomponente (3) im montienen Zustand in dem Hohlraum (1) angeordnet ist, wobei die Funktionskomponente (3) ein nicht vollständig luftdichtes Gehäuse (4) aufweist und wobei im montierten Zustand zumindest ein Teil des Gebäuseinnenraums (5) funktionsbedingt über eine der Funktionskomponente (3) zugeordnete Öffnung (6) im Türkörper nach außen hin im wesentlichen offen ist, wobei im montierten Zustand während des Fahrbetriebs durch aerodynamische Effekte eine bestimmte Druckverteilung an der Kraftfahrzeugtür, vorzugsweise ein Unterdruck im Hohlraum (1) der Kraftfahrzeugtür, entsteht, was eine ggf. durch den Gehäuseinnenraum (5) der Funktionskomponente (3) verlaufende Ausgleichsströmung von Luft in den Hohlraum (1) hinein bewirkt,
**dadurch gekennzeichnet,**
**daß** in der Funktionskomponente (3) mindestens ein Ausgleichsdurchlaß (7) für Ausgleichsströmung vorgesehen ist und daß der Ausgleichsdurchlaß (7) im Hinblick auf ggf. durch den Gehäuseinnenraum (5) der Funktionskomponente (3) verlaufende Ausgleichsströmung als Bypass wirkt.

## Claims

1. Motor vehicle door assembly with a motor vehicle door or the like, wherein the motor vehicle door has a door body, wherein the door body forms a cavity (1), wherein the motor vehicle door has at least one functional component (3) which is arranged in the cavity (1) and is intended for providing a door function, wherein the functional component (3) has a housing (4) which is not fully airtight, and wherein at least part of the housing interior (5), on account of the function thereof, is substantially open outward via an opening (6), which is assigned to the functional component (3), in the door body, wherein, in the fitted state, a certain distribution of pressure arises during the drive mode at the motor vehicle door, preferably a negative pressure in the cavity (1) of the motor vehicle door, due to aerodynamic effects, this causing an equalizing flow of air into the cavity (1), said equalizing flow optionally running through the housing interior (5) of the functional component (3), wherein at least one equalizing passage (7) for the equalizing flow being provided in the motor vehicle door in the region of the functional component (3), **characterized in that** the equalizing passage (7) acts as a bypass with regard to the equalizing flow, which optionally runs through the housing interior (5) of the functional component (3), and **in that** the equalizing passage (7) is provided in the functional component (3) itself.

2. Motor vehicle door assembly according to Claim 1, **characterized in that** the equalizing passage (7) is dimensioned and arranged in such a manner that the equalizing flow running through the housing interior (5) of the functional component (3) is reduced by at least 30%, preferably by at least 50%, and furthermore preferably by at least 80%, compared to an arrangement without an equalizing passage (7), and furthermore preferably **in that** the remaining equalizing flow running through the housing interior (5) of the functional component (3) is negligibly small.

3. Motor vehicle door assembly according to Claim 1 or 2, **characterized in that** the equalizing passage (7) is provided in the door body, preferably in a door panel (2) of the door body, and preferably **in that** the equalizing passage (7) is arranged in the direct vicinity of the functional component.

4. Motor vehicle door assembly according to one of the preceding claims, **characterized in that** the equalizing passage (7) extends through the functional component (3), and preferably **in that** the equalizing passage (7) is a recess in a region of the functional component (3).

5. Motor vehicle door assembly according to one of the preceding claims, **characterized in that** the functional component (3) is configured as a motor vehicle lock, preferably **in that** the motor vehicle lock (3) has a lock latch (8) which can be brought into engagement with a lock striker (9) or the like, and furthermore preferably **in that** the housing (4) of the motor vehicle lock has an inlet slot (10) for the lock striker (9), and **in that** the opening (6) in the door body, which opening is assigned to the motor vehicle lock (3), is assigned to the inlet slot (10).

6. Motor vehicle door assembly according to Claim 5, **characterized in that** the equalizing passage (7) opens out in the inlet slot (10), preferably **in that** the equalizing passage (7) opens out in the base (11) of the inlet slot (10), and furthermore preferably **in that** the equalizing passage (7) is placed upstream of the lock latch (8), as seen in the inlet direction of the lock striker (9).

7. Motor vehicle door assembly according to Claim 5 or 6, **characterized in that** the motor vehicle lock (3) as a whole is configured in an angular manner with a first limb (14) which receives the locking elements, and with a second limb (15) which receives at least part of the lock mechanism, and preferably **in that** the equalizing passage (7) opens out at one end in the inlet slot (10) and at the other end in the passage region between the two limbs (14, 15) of the motor vehicle lock (3).

8. Motor vehicle door assembly according to one of the preceding claims, **characterized in that** the housing (4) of the functional component (3) is sealed off from the opening (6) in the door body, which opening is assigned to the functional component (3).

9. Motor vehicle door assembly according to one of the preceding claims, **characterized in that** a plurality of equalizing passages (7) are provided, and preferably in that the equalizing passages (7) are separated from one another by webs (7a) or the like.

10. Motor vehicle door assembly according to one of the preceding claims, **characterized in that** the equalizing passage (7) is configured to be roundish in cross section, and preferably circular or elliptical, or **in that** the equalizing passage (7) is configured to be angular in cross section, preferably rectangular, or in that the equalizing passage (7) is configured to be substantially tubular, and preferably **in that**, in the fitted state, the tubular equalizing passage (7) extends substantially horizontally.

11. Motor vehicle door assembly according to one of the preceding claims, **characterized in that** the equalizing passage (7) is configured in the manner of a nozzle, and/or that the equalizing passage (7) comprises a labyrinth-like structure.

12. Motor vehicle door assembly according to one of the preceding claims, **characterized in that** the equalizing passage (7) is adjoined towards the cavity (1) by an umbrella-like lug (17) which, in the fitted state, provides splash protection upwards, and/or **in that** the equalizing passage (7) is adjoined towards the cavity (1) by a hose, a pipe or the like.

13. Motor vehicle door assembly according to one of the preceding claims, **characterized in that** at least one baffle plate for the equalizing flow is provided in the region of the equalizing passage (7), and preferably **in that** the baffle plate at the same time provides mechanical shielding with the effect of protecting against intrusion.

14. Functional component, in particular motor vehicle lock, for a motor vehicle door, wherein the motor vehicle door has a door body, wherein the door body forms a cavity (1) and, in the fitted state, the functional component (3) is arranged in the cavity (1), wherein the functional component (3) has a housing (4) which is not fully airtight, and wherein, in the fitted state, at least part of the housing interior (5), on account of the function thereof, is substantially open outwards via an opening (6) in the door body, which opening is assigned to the functional component (3), wherein, in the fitted state, a certain distribution of pressure arises during the driving mode at the motor vehicle door, preferably a negative pressure in the cavity (1) of the motor vehicle door, due to aerodynamic effects, this causing an equalizing flow of air into the cavity (1), the equalizing flow optionally running through the housing interior (5) of the functional component (3), **characterized in that** at least one equalizing passage (7) for the equalizing flow is provided in the functional component (3), and **in that** the equalizing passage (7) acts as bypass with regard to the equalizing flow which optionally runs through the housing interior (5) of the functional component (3).

## Revendications

1. Agencement de porte de véhicule automobile équipé d'une porte de véhicule automobile ou de son équivalent, la porte de véhicule automobile comportant un corps de porte, le corps de porte formant un espace creux (1), la porte de véhicule automobile comportant au moins un composant fonctionnel (3) disposé dans l'espace creux (1) afin de mettre à disposition une fonction de porte, le composant fonctionnel (3) comportant un carter (4) non entièrement étanche à l'air et au moins une partie de l'espace intérieur de carter (5) étant ouverte pour l'essentiel vers l'extérieur dans le corps de porte de façon fonctionnelle, via une ouverture (6) associée au composant fonctionnel (3), sachant qu'à l'état monté, une répartition déterminée de la pression se produit pendant la conduite au niveau de la porte de véhicule automobile, de préférence une sous-pression dans l'espace creux (1) de la porte de véhicule automobile, du fait des effets aérodynamiques, ce qui entraîne le cas échéant un flux de compensation d'air dans l'espace creux (1) en passant à travers l'espace intérieur de carter (5) du composant fonctionnel (3), au moins un passage de compensation (7) étant prévu dans la porte de véhicule automobile pour le flux de compensation, dans la zone du composant fonctionnel (3), **caractérisé en ce que** le passage d'équilibrage (7) agit comme un élément de déviation pour ce qui est du flux de compensation circulant le cas échéant à travers l'espace intérieur de carter (5) du composant fonctionnel (3) et que le passage de compensation (7) est lui-même prévu dans le composant fonctionnel (3).

2. Agencement de porte de véhicule automobile selon la revendication 1, **caractérisé en ce que** le passage de compensation (7) est dimensionné et disposé de telle sorte que le flux de compensation circulant à travers l'espace intérieur de carter (5) du composant fonctionnel (3) est réduit par rapport à un agencement sans passage de compensation (7) d'au moins 30 %, de préférence d'au moins 50 %, de façon davantage préférée d'au moins 80 %, et **en ce que**, de façon davantage préférée, le flux de compensation restant circulant à travers l'espace intérieur de carter (5) du composant fonctionnel (3) est réduit à une part négligeable.

3. Agencement de porte de véhicule automobile selon la revendication 1 ou 2, **caractérisé en ce que** le passage de compensation (7) est placé dans le corps de porte, de préférence dans une tôle de porte (2) du corps de porte, et de préférence **en ce que** le passage de compensation (7) est disposé à proximité immédiate du composant fonctionnel.

4. Agencement de porte de véhicule automobile selon l'une quelconque des revendications précédentes, **caractérisé en ce que** le passage de compensation (7) traverse le composant fonctionnel (3) et que le passage de compensation (7) prend de préférence la forme d'un évidement réalisé dans une zone du composant fonctionnel (3).

5. Agencement de porte de véhicule automobile selon l'une quelconque des revendications précédentes, **caractérisé en ce que** le composant fonctionnel (3) prend la forme d'une serrure de véhicule automobile, que la serrure de véhicule automobile (3) comporte de préférence un loquet de serrure (8) pouvant être mis en prise avec une clavette de fermeture (9) ou son équivalent, que le carter (4) de la serrure de véhicule automobile comporte de façon davantage préférée une fente d'introduction (10) pour la clavette de fermeture (9) et que l'ouverture (6) associée à la serrure de véhicule automobile (3) placée dans le corps de porte est associée à la fente d'introduction (10).

6. Agencement de porte de véhicule automobile selon la revendication 5, **caractérisé en ce que** le passage de compensation (7) débouche dans la fente d'introduction (10), que le passage de compensation (7) débouche de préférence dans le fond (11) de la fente d'introduction (10), que le passage de compensation (7) est placé de façon davantage préférée devant le loquet de serrure (8), vue dans la direction d'introduction de la clavette de fermeture (9).

7. Agencement de porte de véhicule automobile selon la revendication 5 ou 6, **caractérisé en ce que** la serrure de véhicule automobile (3) prend dans l'ensemble une forme en angle avec un premier pan (14) qui reçoit les éléments de fermeture et un deuxième pan (15) qui reçoit au moins une partie du mécanisme de serrure, que le passage de compensation (7) débouche de préférence, au niveau d'une extrémité, dans la fente d'introduction (10) et, au niveau de l'autre extrémité, dans la zone de transition située entre les deux pans (14, 15) de la serrure de véhicule automobile (3).

8. Agencement de porte de véhicule automobile selon l'une quelconque des revendications précédentes, **caractérisé en ce que** le carter (4) du composant fonctionnel (3) est étanchéifié par rapport à l'ouverture (6) du corps de porte associée au composant fonctionnel (3).

9. Agencement de porte de véhicule automobile selon l'une quelconque des revendications précédentes,
**caractérisé en ce que** plusieurs passages de compensation (7) sont prévus, que les passages de compensation (7) sont de préférence séparés les uns des autres par des étais (7a) ou leur équivalent.

10. Agencement de porte de véhicule automobile selon l'une quelconque des revendications précédentes, **caractérisé en ce que** le passage de compensation (7) prend une forme arrondie en section transversale, de préférence circulaire ou elliptique, ou que le passage de compensation (7) prend une forme avec des angles en section transversale, de préférence rectangulaire, ou que le passage de compensation (7) prend pour l'essentiel une forme de tube, le passage de compensation (7) en forme de tube s'étendant de préférence pour l'essentiel à l'horizontale à l'état monté.

11. Agencement de porte de véhicule automobile selon l'une quelconque des revendications précédentes, **caractérisé en ce que** le passage de compensation (7) prend la forme d'une buse et/ou que le passage de compensation (7) présente une structure de type en labyrinthe.

12. Agencement de porte de véhicule automobile selon l'une quelconque des revendications précédentes, **caractérisé en ce qu'**un appendice (17) de type écran est placé à côté du passage de compensation (7) en direction de l'espace creux (1), ledit appendice offrant, à l'état monté, une protection contre les éclaboussures giclant vers le haut, et/ou qu'un tuyau flexible, un tube ou leur équivalent est placé à c6té du passage de compensation (7) en direction de l'espace creux (1).

13. Agencement de porte de véhicule automobile selon l'une quelconque des revendications précédentes, **caractérisé en ce qu'**au moins une tôle conductrice est
prévue pour le flux de compensation dans la zone des passages de compensation (7) et que la tôle conductrice garantit, de préférence simultanément un blindage mécanique allant dans le sens d'une protection antieffraction.

14. Composant fonctionnel, notamment serrure de véhicule automobile, pour une porte de véhicule automobile, la porte de véhicule automobile comportant un corps de porte, le corps de porte formant un espace creux (1) et le composant fonctionnel (3) étant disposé dans l'espace creux (1) à l'état monté, le composant fonctionnel (3) comportant un carter (4) non entièrement étanche à l'air et au moins une partie de l'espace intérieur de carter (5) étant ouverte pour l'essentiel vers l'extérieur dans le corps de porte de façon fonctionnelle, via une ouverture (6) associée au composant fonctionnel (3), sachant qu'à l'état monté, une répartition déterminée de la pression se produit pendant la conduite au niveau de la porte de véhicule automobile, de préférence une sous-pression dans l'espace creux (1) de la porte de véhicule automobile, du fait des effets aérodynamiques, ce qui entraîne le cas échéant un flux de compensation d'air dans l'espace creux (1) en passant à travers l'espace intérieur de carter (5) du composant fonctionnel (3), **caractérisé en ce qu'**au moins un passage de compensation (7) est prévu dans le composant fonctionnel (3) pour le flux de compensation et que le passage de compensation (7) agit comme un élément de déviation pour ce qui est du flux de compensation circulant le cas échéant à travers l'espace intérieur de carter (5) du composant fonctionnel (3).
